# FASCICULE DE BREVET EUROPEEN

(11) **EP 2 683 673 B1**
(45) Date de publication et mention de la délivrance du brevet: **25.11.2015**
(21) Numéro de dépôt: 12700854.8
(22) Date de dépôt: 23.01.2012
(51) Int. Cl.: C04B 35/00, G21C 21/00

(54) **PROCEDE DE FABRICATION D'UN COMPOSITE A MATRICE CERAMIQUE**
VERFAHREN ZUR HERSTELLUNG EINES VERBUNDSTOFFES MIT EINER KERAMIKMATRIX
METHOD FOR PRODUCING A COMPOSITE INCLUDING A CERAMIC MATRIX

(30) Priorité: 07.03.2011 FR 1151825
(43) Date de publication de la demande: 15.01.2014
(73) Titulaire: Commissariat à l'Énergie Atomique et aux Énergies Alternatives, 75015 Paris (FR)
(72) Inventeur: SAUDER, Cédric, F-78730 Saint Arnoult En Yvelines (FR); LORRETTE, Christophe, F-33140 Villenave d'Ornon (FR)
(74) Mandataire: Ahner, Philippe
(86) Numéro de dépôt international: PCT/EP2012/050979
(87) Numéro de publication internationale: WO 2012/119805

(56) Documents cités:
- EP-A1- 0 611 741

## Description

### DOMAINE TECHNIQUE

La présente invention concerne la fabrication de pièces en matériaux composites renforcés.

En particulier, l'invention concerne un procédé de fabrication d'une pièce en matériau composite à matrice céramique.

### ÉTAT DE LA TECHNIQUE ANTÉRIEURE

Les pièces en matériaux composites à matrice céramique (également appelés matériaux CMC) se caractérisent par des propriétés mécaniques remarquables, notamment en termes de dureté, de ténacité, de tenue à l'usure et de résistance aux chocs mécaniques et thermiques.

Du fait de ces propriétés particulières, les pièces en matériaux composites à matrice céramique sont particulièrement appréciées et utilisées, ou bien encore envisagées, dans de nombreux domaines d'application, comme par exemple dans l'aéronautique (disques de freins ; pièces de structures des réacteurs fonctionnant à haute température...), dans les turbines à gaz (pièces de structures fonctionnant à haute température), dans le nucléaire (matériau de gainage pour les réacteurs SFR (c'est-à-dire les réacteurs à neutrons rapides à caloporteur sodium), pour les réacteurs GFR (c'est-à-dire les réacteurs rapides à caloporteur gaz), voire pour les réacteurs REP (c'est-à-dire les réacteurs à eau pressurisée) ; matériau pour la réalisation de barres de contrôle...).

Les pièces en matériaux composites à matrice céramique sont constituées d'une matrice en matériau céramique et de fibres qui sont elles aussi en matériau céramique ; le plus souvent, les fibres sont en carbone ou en carbure de silicium. Les fibres permettent la bonne tenue mécanique de la pièce, tandis que la matrice, qui est la matière présente entre les fibres, a pour fonction de lier les fibres entre elles et confère sa cohésion à la pièce.

La première étape pour la fabrication d'une pièce en matériau composite à matrice céramique consiste à réaliser une préforme fibreuse poreuse à partir de fils de fibres continus ou discontinus en céramique (par exemple des fibres en carbure de silicium ou en carbone). Chacun des fils utilisés peut comprendre jusqu'à plusieurs centaines de fibres, voire plusieurs milliers ou dizaines de milliers de fibres.

La préforme obtenue à l'issue de cette première étape est couramment appelée préforme sèche ; elle possède une grande souplesse et une porosité importante.

La préforme fibreuse est un renfort de fibres, de la forme et aux dimensions de la pièce à réaliser. Cette préforme (et, par voie de conséquence, la pièce à réaliser) peut avoir toutes sortes de formes.

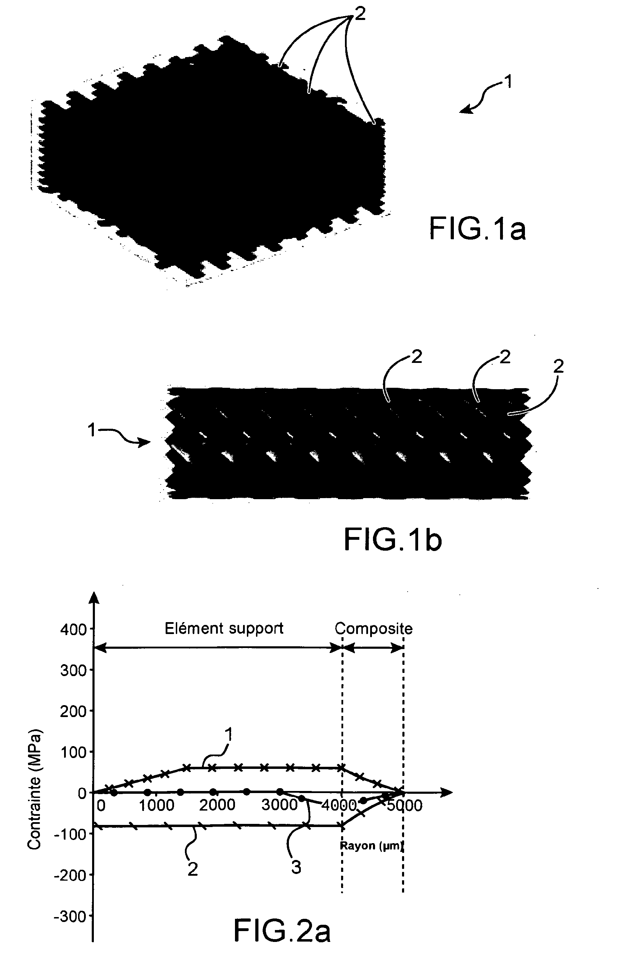

Par exemple, dans le cadre de la réalisation d'objets/pièces de type plaque, on utilise couramment la technique du tissage pour réaliser la préforme. On obtient alors une préforme 1 telle que représentée dans la figure 1a, où les fils 2 s'entrecroisent.

Pour la réalisation de tubes, on peut par exemple utiliser la technique du tressage ou encore la technique de l'enroulement filamentaire, qui s'adaptent parfaitement aux objets possédant un axe de révolution. On obtient alors une préforme 1 telle que représentée dans la figure 1b.

Afin de rendre la pièce finale rigide et de lui donner des caractéristiques mécaniques intéressantes, il est nécessaire de réaliser ensuite une étape dite de densification, qui va consister à venir combler la porosité de la préforme sèche par une ou plusieurs phases céramiques denses (carbone, carbure de silicium...) et former la matrice du composite.

Cette étape de densification peut être effectuée par différentes techniques, dont les plus connues sont l'infiltration chimique en phase vapeur (ou CVI pour « Chemical Vapor Infiltration » en anglais) et l'infiltration de polymère et pyrolyse (ou PIP pour « Polymer Infiltration and Pyrolysis » en anglais).

Quelle que soit la technique utilisée pour réaliser la densification, il est nécessaire d'utiliser des outillages qui servent d'éléments support à la préforme, afin de maîtriser les caractéristiques mécaniques et la géométrie finale des pièces composites que l'on souhaite obtenir. Il est nécessaire que ces outillages soient chimiquement compatibles avec la préforme fibreuse et les produits utilisés (gaz et/ou liquides) aux hautes températures requises par ces procédés (environ 1000°C, voire au-delà).

A titre d'exemple, pour la fabrication de pièces ou d'objets de type plaque, on maintient de manière contrôlée la préforme sèche entre deux plaques en graphite (percées de trous espacés régulièrement pour rendre accessible la préforme au gaz ou aux liquides précurseurs) que l'on viendra retirer par la suite.

Dans le cadre de la fabrication d'une pièce à axe de révolution, par exemple un tube, on réalise le tressage ou toute autre technique de mise en forme adaptée de la préforme sèche sur un mandrin en graphite.

L'outillage utilisé est typiquement en graphite car, en plus d'être d'un coût modeste, le graphite présente une excellente compatibilité avec la plupart des renforts fibreux céramiques (carbone, carbure de silicium...) aux hautes températures requises par les procédés de densification.

Cependant, le graphite présente également plusieurs inconvénients.

L'un des inconvénients du graphite est sa faible rigidité (module d'élasticité E compris entre 20 et 30 Gpa), ce qui le rend difficile à utiliser pour la réalisation de pièces de grandes longueurs, mais de faibles diamètres comme les tubes. C'est la raison pour laquelle, lors des opérations de tressage ou autre technique de mise en oeuvre de fils nécessitant un mandrin comme élément support, on souhaite éviter l'utilisation de mandrins en graphite.

D'autre part, le graphite est friable, ce qui rend difficile le respect des cotes et des tolérances des pièces sur de grandes longueurs.

Enfin, le graphite présente l'inconvénient d'être particulièrement délicat à retirer après la ou les étapes de densification du renfort fibreux classiquement utilisées (CVI, PIP...).

En effet, après la ou les étapes de densification, le graphite reste, la plupart du temps, fortement lié au matériau composite céramique ainsi élaboré. Il est alors nécessaire d'éliminer l'outillage en graphite en recourant à une oxydation contrôlée du graphite entre 400 et 500°C.

Or cette oxydation est une étape longue, coûteuse et qui peut conduire à une dégradation du matériau composite. En outre, l'oxydation ne permet généralement pas d'obtenir une élimination totale de l'outillage.

Il convient alors d'employer des techniques d'usinage pour obtenir l'élimination complète de l'outillage ; cependant, ces techniques d'usinage peuvent entraîner une altération du composite, sans toutefois assurer un respect des cotes et des tolérances strictes sur la surface de la pièce en contact avec l'outillage (interface).

On comprend donc que l'utilisation d'outillages en graphite peut convenir pour la fabrication de pièces pour lesquelles la garantie de caractéristiques mécaniques et le respect de la forme géométrique de la surface de la pièce en contact avec l'outillage (comme par exemple la surface interne des pièces à axe de révolution) ne sont pas primordiaux ; cela n'est toutefois pas envisageable pour la fabrication de pièces pour lesquelles de fortes contraintes sur ces paramètres sont requises.

Les Inventeurs se sont donc fixé comme but de concevoir un procédé de fabrication qui ne présente pas les inconvénients de l'art antérieur.

Plus précisément, les Inventeurs ont cherché à concevoir un procédé de fabrication qui permette d'améliorer la qualité des pièces composites réalisées, à savoir un procédé qui permette de conserver les caractéristiques mécaniques et/ou de respecter les cotes, les tolérances et/ou la rugosité de la surface des pièces en matériaux composites à matrice céramiques (CMC) ainsi réalisées.

### EXPOSÉ DE L'INVENTION

Ce but est atteint grâce à un procédé de réalisation d'une pièce en matériau composite à matrice en matériau céramique et à fibres en matériau céramique, le procédé comprenant les étapes successives suivantes :
- réalisation d'une préforme fibreuse par entrelacement de fils constitués de fibres en matériau céramique sur une surface de contact d'un élément support reproduisant la forme interne et/ou externe de la pièce à réaliser ;
- densification partielle de la préforme fibreuse à une température inférieure à la température de fusion du matériau de l'élément support et inférieure à la température de fusion du matériau des fibres de la préforme, ladite densification partielle aboutissant à une préforme fibreuse consolidée comprenant une fraction volumique en matrice supérieure à 5% et au plus égale à 40% du volume de matrice de la pièce à réaliser ;

- retrait de l'élément support de la préforme fibreuse consolidée par attaque chimique de la surface de contact du matériau de l'élément support ;
- densification de la préforme consolidée, réalisée à une température inférieure à la température de fusion des fibres de cette préforme.

Il est à noter que la densification, dans la fabrication d'un matériau composite renforcé tel qu'un matériau composite à matrice céramique, est une étape bien connue de l'homme du métier, qui consiste à venir combler la porosité de la préforme fibreuse avec la matrice.

La densification peut par exemple consister en une densification CVI, c'est-à-dire en une infiltration d'un gaz précurseur de la matrice céramique dans la préforme fibreuse, réalisée dans un four à température élevée ; en envoyant le gaz précurseur à haute température (généralement comprise entre 900 et 1000°C ou supérieure) sur la préforme, le gaz précurseur se décompose et produit du carbone ou des composés céramiques (carbure de silicium ou autres carbures) qui viennent combler la porosité de la préforme fibreuse.

La densification peut également être une densification PIP, c'est-à-dire une imprégnation d'une solution d'un polymère précurseur de la matrice céramique de la pièce à réaliser, suivie d'une pyrolyse du polymère précurseur à haute température.

Dans le procédé selon l'invention, la densification se fait en deux étapes, séparées par une étape de retrait de l'élément support sur lequel est réalisé la préforme fibreuse.

Plus précisément, dans le procédé de l'invention, on réalise dans un premier temps une préforme fibreuse poreuse ayant la forme et les dimensions de la pièce à fabriquer en entrelaçant des fils sur un élément support ; cet entrelacement des fils peut consister en un tissage, en un tressage des fils ou en toute autre technique connue d'entrelacement de fils.

On soumet ensuite la préforme à une densification partielle afin de la consolider mécaniquement.

Puis, on retire l'élément support en procédant à sa destruction totale ou partielle et on termine la densification de la préforme, la densification n'étant alors plus limitée par la température de fusion du matériau de l'élément support.

L'étape de retrait de l'élément support de la préforme fibreuse consolidée peut ainsi résulter d'une destruction partielle de l'élément support par attaque chimique, à savoir une attaque chimique d'au moins la surface de contact du matériau de l'élément support, ce qui permet le retrait de l'élément support partiellement détruit de la préforme fibreuse consolidée. La destruction partielle est en fait une consommation ou dissolution partielle de l'élément support.

Cette étape de retrait peut également consister en une destruction totale de l'élément support ; dans ce cas, l'attaque chimique se produit sur l'ensemble de l'élément support. Là encore la destruction est en fait une consommation, ou plus précisément une dissolution, de l'élément support.

En fait, une destruction totale n'est pas toujours indispensable, notamment dans le cas où la préforme fibreuse entoure l'élément support et qu'il suffit de diminuer le diamètre externe de ce dernier pour obtenir le retrait. Une dissolution en surface est alors suffisante pour que l'élément support et la préforme fibreuse puissent être dissociés.

Par contre, dans le cas où la préforme est fermée, par exemple lorsque la préforme a une forme de sphère tissée sur un élément support ayant lui aussi la forme d'une sphère, il est alors nécessaire de détruire complètement l'élément support afin qu'il puisse être retiré.

De préférence, la préforme fibreuse consolidée à l'étape de densification partielle comprend une fraction volumique en matrice au plus égale à 30% du volume de matrice de la pièce à réaliser. Préférentiellement, la préforme fibreuse consolidée à l'étape de densification partielle comprend une fraction volumique en matrice au plus égale à 20%, de préférence au plus égale à 10%, du volume de matrice de la pièce à réaliser.

En retirant l'élément support avant que la fraction volumique de matrice infiltrée ne soit supérieure ou égale à 40%, de préférence inférieure à 30%, préférentiellement inférieure à 20 et de préférence au plus égale à 10%, cela permet de limiter la mise sous contrainte mécanique de la matrice, qui possède de faibles caractéristiques en traction (σ_{Rm} ∼ 100 Mpa pour le SiC) par rapport à la préforme fibreuse, plus apte à résister à de fortes contraintes de traction (σ_{Rf} ∼ 2000 Mpa pour le SiC). Ainsi, plus la fraction volumique de matrice est faible, plus les contraintes résiduelles seront prises en charges par la préforme fibreuse, ce qui limite le chargement de la matrice et, par voie de conséquence, la fissuration du matériau composite. Bien entendu, il faut cependant que la préforme fibreuse soit consolidée avant de retirer l'élément support, c'est-à-dire que la fraction volumique de matrice soit suffisante pour qu'une fois l'élément support retiré, la préforme fibreuse consolidée ait une rigidité suffisante pour qu'elle puisse maintenir ses caractéristiques géométriques et être manipulée facilement.

Selon une disposition préférée de l'invention, l'élément support est en silice, c'est-à-dire en dioxyde de silicium. On propose d'utiliser préférentiellement du verre de silice, qui est la forme amorphe de la silice, le quartz étant sa forme cristalline, car le verre de silice présente en particulier un coût inférieur à celui du quartz. Il est à noter que le verre de silice (SiO₂) est parfois nommé, abusivement, quartz par soucis de simplification.

Selon une variante possible de l'invention, au lieu d'être exclusivement en silice, l'élément support est en un matériau à base de silice ; l'élément support doit toutefois comprendre au moins 80% en poids de silice. Il peut par exemple s'agir d'un ciment obtenu en mélangeant une poudre de silice à 95% en poids, de préférence à 99% en poids, avec un liant aqueux.

Selon une deuxième disposition préférée de l'invention, l'élément support est en alumine (Al₂O₃).

Selon une variante possible de l'invention, l'élément support peut être en un matériau à base d'alumine, à condition que ce matériau contienne au moins 80% en poids d'alumine. Il peut par exemple s'agir d'un ciment obtenu en mélangeant une poudre d'alumine à 95% en poids, de préférence à 99% en poids, avec un liant aqueux.

Selon une troisième disposition préférée de l'invention, l'élément support est en zircone.

Selon une variante possible de l'invention, l'élément support peut être en un matériau à base de zircone, à condition que ce matériau contienne au moins 80% en poids de zircone, par exemple un ciment obtenu en mélangeant une poudre de zircone à 95% en poids, de préférence à 99% en poids, avec un liant aqueux.

Selon une quatrième disposition préférée de l'invention, l'élément support comporte une âme qui est en un métal apte à résister à la température de densification de la préforme, de préférence un métal résistant à une température de 1000°C, et qui est recouverte d'une couche de silice, de verre de silice, d'alumine ou de zircone. Lorsqu'on dit que le métal doit résister à la température, cela signifie qu'il doit conserver sa forme géométrique ; en d'autres termes, il ne doit pas fondre ou devenir superplastique.

En ce qui concerne l'attaque chimique de l'élément support, qu'il soit en verre de silice, en alumine ou en zircone, elle est avantageusement obtenue à l'aide d'un acide, de préférence de l'acide fluorhydrique, ou d'une base, à savoir une solution basique concentrée (par exemple de la soude NaOH).

Il est bien entendu que l'agent utilisé pour réaliser l'attaque chimique est choisi de manière à ce que seul l'élément support soit consommé : il s'agit d'une attaque chimique sélective. L'acide fluorhydrique est un bon exemple, puisque cet acide attaque le verre de silice, l'alumine et la zircone, sans attaquer le carbone, le carbure de silicium et d'autres céramiques utilisables.

On précise que dans le cas particulier de la quatrième disposition préférée de l'invention, l'élément support n'est pas entièrement consommé ; en effet, c'est le revêtement présent sur l'âme métallique qui est consommé par l'attaque chimique. Ainsi, lorsque l'élément support comporte une âme métallique qui est recouverte d'une couche en verre de silice, en alumine ou en zircone, l'attaque chimique de l'élément support est avantageusement obtenue en réalisant l'attaque chimique de la couche de silice, de verre de silice, d'alumine ou de zircone présente sur l'âme à l'aide d'un acide, de préférence de l'acide fluorhydrique, ou d'une base.

Avantageusement, l'élément support, au lieu d'être un élément plein, est un élément creux.

Avantageusement, l'élément support possède un axe de révolution (il peut par exemple s'agir d'un élément ayant une forme cylindrique) ou est de forme plane. Il peut par exemple s'agir d'un mandrin tubulaire ou d'une plaque.

Avantageusement, les fibres sont en un matériau choisi parmi le carbone et le carbure de silicium.

Avantageusement, la matrice est en un matériau choisi parmi le carbone et le carbure de silicium.

Le procédé de réalisation selon l'invention peut permettre de réaliser de nombreuses pièces de formes différentes. A titre d'exemple, la pièce en matériau composite peut être une gaine en matériau composite pour un réacteur à neutrons rapides à caloporteur gaz (ou réacteur GFR pour « Gas Fast Reactors » en anglais), pour un réacteur à neutrons rapides à caloporteur sodium (ou réacteur SFR pour « Sodium Fast Reactors » en anglais) ou encore pour un réacteur à eau pressurisée. La pièce peut aussi être un tube hexagonal en matériau composite, par exemple pour un réacteur SFR, un réacteur à eau pressurisée ou un réacteur GFR.

Le procédé de réalisation selon l'invention présente de nombreux avantages.

Il permet d'obtenir des pièces en matériau composite ayant des cotes et des tolérances d'erreurs plus précises que dans le cas de l'utilisation d'un élément support en graphite et ce, quelle que soit la taille des pièces mises en oeuvre.

Le procédé selon l'invention permet également de limiter les coûts de fabrication des pièces en matériau composite, puisqu'il n'est plus nécessaire d'avoir recours à un usinage de l'élément support et qu'il est possible d'utiliser, pour l'élément support, un matériau qui est relativement bon marché, comme le verre de silice.

Enfin, comme l'élément support est retiré sans avoir besoin de recourir à une oxydation et/ou à un usinage comme dans le cas du graphite, ce qui pourrait endommager la surface de la pièce en matériau composite, on conserve les caractéristiques mécaniques et les cotes de la pièce en matériau composite.

Les applications potentielles du procédé selon l'invention concernent toutes pièces en matériau composite formées d'une matrice en matériau céramique dont le respect des tolérances des côtes et de la pureté est important. On peut citer en particulier la fabrication de gaine combustible céramique pour les réacteurs GFR ou SFR de quatrième génération.

L'invention sera mieux comprise et d'autres avantages et particularités apparaîtront à la lecture de la description qui va suivre, donnée à titre d'exemple non limitatif, accompagnée des figures annexées 1 à 3.

### BRÈVE DESCRIPTION DES DESSINS

Les figures 1a et 1b représentent respectivement une vue en trois dimensions d'une préforme fibreuse 1 de forme plane obtenue par tissage « interlock 2.5D » de fils 2 et une vue en trois dimensions de forme tubulaire d'une préforme fibreuse 1 obtenue par tressage 2D (c'est-à-dire en deux dimensions) de fils 2. On précise que les fibres composant chacun des fils 2 ne sont pas représentées.

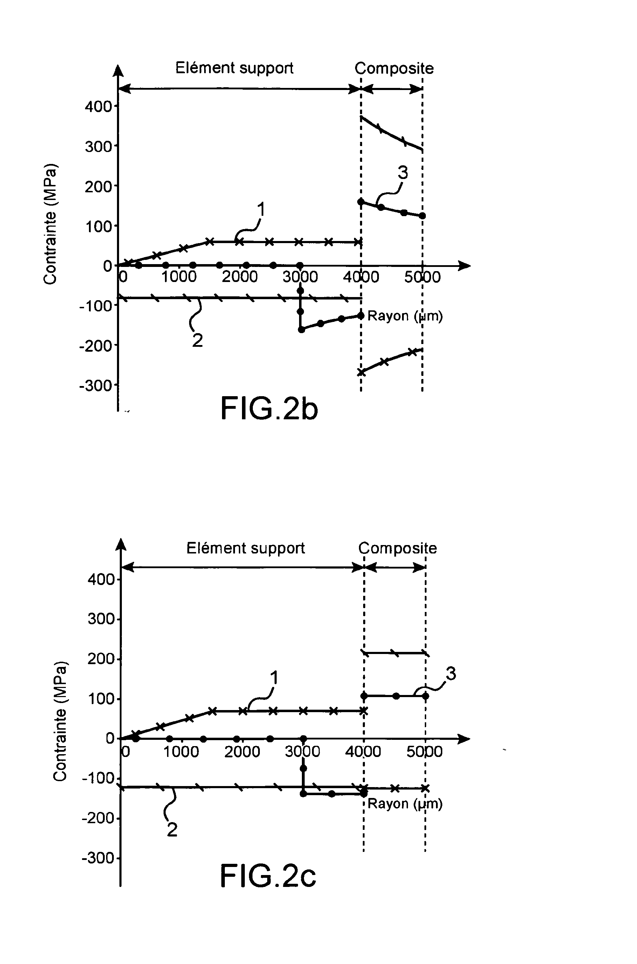

Les figures 2a, 2b et 2c illustrent respectivement l'effet de la composition de l'élément support sur les contraintes résiduelles radiales (figure 2a), circonférentielles (figure 2b) et longitudinales (figure 2c), générées au sein des matériaux en présence (c'est-à-dire les matériaux de l'élément support et du composite), pour une pièce en matériau composite obtenue par densification d'une préforme fibreuse à une température située entre 900 et 1000°C, selon une méthode CVI connue. Sur ces figures 2a à 2c, les courbes 1 représentent les calculs pour un mandrin plein (tige) en graphite, les courbes 2 pour un mandrin plein (tige) en verre de silice et les courbes 3 pour un mandrin creux (tube) en verre de silice d'épaisseur 1 mm.

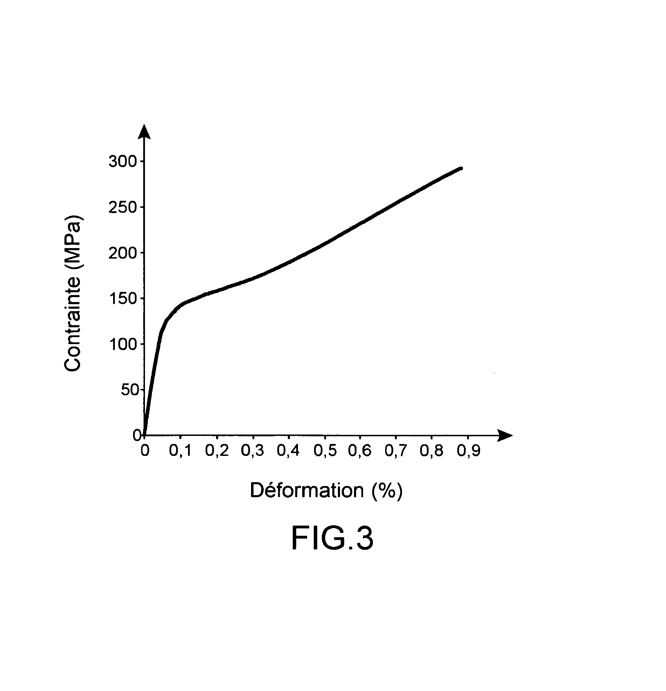

La figure 3 représente une courbe de traction d'une pièce de forme tubulaire en matériau composite SiC/SiC, ayant une préforme fibreuse obtenue par un tressage 2D et densifiée par un procédé connu de densification CVI.

### EXPOSÉ DÉTAILLÉ DE MODES DE RÉALISATION PARTICULIERS

Les Inventeurs proposent de réaliser une pièce en matériau composite à matrice céramique en remplaçant le matériau de l'élément support, habituellement en graphite, par un matériau en verre de silice, et de réaliser la densification de la préforme fibreuse en deux étapes.

Le tableau ci-après compare les principales caractéristiques de verres de silice avec différents graphites isotropes disponibles dans le commerce. A titre d'information, nous avons également indiqué les principales caractéristiques de l'alumine et de la zircone qui, comme le verre de silice, peuvent être utilisées, dans le cadre de la présente invention, pour réaliser l'élément support.

Pour certaines caractéristiques, les gammes données correspondent soit à une variabilité de la caractéristique mesurée, soit à des écarts propres à de légères variantes commerciales.

En consultant ce tableau, on peut constater que le verre de silice présente de nombreux avantages.

Tout d'abord, en plus d'être d'un coût raisonnable, il présente une meilleure rigidité que le graphite.

Le verre de silice présente également l'avantage de présenter une faible adhésion avec les matrices céramiques de type carbone et carbure de silicium, ce qui facilite le retrait de l'élément support.

| **Caractéristiques** | **Verre de silice** | **Graphite** | **Alumine** | **zircone** |
|---|---|---|---|---|
| **Densité** | 2,2 | 1,7 - 2 | 3,9 | 5,9 |
| **Dureté (Mohs)** | 5,5 - 6,5 | 1 - 2 | 9,2 | 7,5 |
| **Contrainte à la rupture en traction (MPa)** | 50 | 40 - 80 | ∼ 200 | ∼ 200 |
| **Contrainte à la rupture en compression (MPa)** | > 1000 | > 150 | 2200 - 2600 | ∼ 2000 |
| **Module d'élasticité (GPa)** | 70 - 90 | 20 - 30 | 300 - 400 | ∼ 220 |
| **Coefficient de dilatation (10⁻⁶°C⁻¹)** | 0,55 | 3 - 6 | ∼ 8 | ∼ 10 |
| **Conductivité thermique (W/m/K)** | 1,4 | 80 - 130 | 26 - 35 | ∼ 2 |
| **Température maximale d'utilisation sous atmosphère inerte (°C)** | 1100 | > 2000 | ∼ 1700 | ∼ 2000 |
| **Température maximale d'utilisation sous air (°C)** | 1100 | ∼ 400 | ∼ 1700 | ∼ 2000 |

En outre, sa stabilité thermomécanique et sa compatibilité chimique sont parfaites avec le carbone, le carbure de silicium et de nombreuses autres céramiques jusqu'à environ 1100°C. Il convient de préciser que cette température ne devra pas être dépassée lors du procédé de densification partielle utilisé pour consolider la préforme fibreuse. En effet, au dessus de 1100°C, le verre de silice perd ses propriétés mécaniques.

Pour réaliser une pièce en matériau composite, on commence par réaliser la mise en forme d'une préforme fibreuse sur un élément en verre de silice en procédant à l'entrelacement de fils. L'entrelacement des fils peut consister en un tissage, un tressage ou toute autre technique connue d'entrelacement de fils.

Une fois que la préforme est obtenue, il faut la consolider avant de retirer l'élément support.

Pour cela, on procède à la densification partielle de la préforme fibreuse par CVI, PIP ou toute autre technique de densification dont la température de mise en oeuvre est inférieure à 1100°C (température de fusion du verre de silice). La pièce consolidée obtenue est une pièce composite ayant une faible fraction volumique de matrice. Cette fraction volumique est au plus égale à 40% ; de préférence, elle est au plus égale à 30%.

Si pour le graphite l'élément support peut être utilisé jusqu'à l'obtention du composite final, il est primordial, dans le cas de l'utilisation d'un élément support en verre de silice, de retirer l'élément support avant que la fraction volumique de matrice soit trop importante. Dans le cas contraire, on pourrait générer une fissuration importante du composite, voire sa rupture totale en fin de procédé.

En effet, l'inconvénient du verre de silice pour une utilisation dans des procédés de mise en oeuvre à haute température est la différence entre les coefficients de dilation de ce matériau et des céramiques élaborées (carbone, carbure de silicium...). Ainsi, lors du refroidissement à température ambiante en fin de procédé, cette différence entre les coefficients de dilatation génère des contraintes résiduelles au sein des matériaux (élément support et pièce en matériau composite) qui peuvent être importantes (allant jusqu'à plusieurs centaines de MPa) et conduire à la fissuration de l'élément support, voire, plus grave, de la pièce en matériau composite.

Cela est d'autant plus vrai en présence de contraintes résiduelles de traction sur les matériaux céramiques.

Afin de limiter les contraintes résiduelles, il est préférable d'utiliser un élément support creux, plutôt qu'un élément support plein. En effet, en limitant la quantité de matériau de l'élément support, on limite de ce fait les contraintes. Il est par exemple préférable d'utiliser un mandrin de type tubulaire pour la fabrication de pièces de forme tubulaire, même si l'utilisation d'un mandrin plein reste possible.

Pour illustrer cette conclusion, des calculs ont été réalisés en prenant pour exemple la réalisation d'une gaine composite pour les réacteurs GFR, à savoir une pièce composite tubulaire en composite SiC/SiC ayant un diamètre interne de 8 mm et un diamètre externe de 10 mm.

Ces calculs ont été réalisés en prenant en compte l'utilisation de fils constitués de fibres en carbure de silicium de dernière génération compatibles avec un environnement nucléaire, à savoir des fibres de type Hi-Nicalon S^{®} ou SA3^{®} et en considérant que l'élément support est un mandrin (élément de forme cylindrique).

Nous avons considéré trois types de mandrins : le premier est une tige en graphite, le second est une tige en verre de silice et le dernier est un tube en verre de silice, chacun de ces mandrins ayant un diamètre externe de 8 mm.

La préforme fibreuse est réalisée sur chaque mandrin selon un tressage 2D, puis on procède à sa densification complète, sans retirer l'élément support. La densification est ici, dans notre exemple, une densification classique CVI et est conduite à une température située entre 900 et 1000°C (c'est-à-dire dans la gamme de température classiquement utilisée pour effectuer une densification).

Après un retour à la température ambiante, le calcul des contraintes résiduelles au sein des deux matériaux (mandrin et composite) est alors simulé à l'aide d'un modèle analytique alimenté par les propriétés thermomécaniques de chaque matériau utilisé.

Les résultats du calcul des contraintes résiduelles de traction suivant les directions (a) radiale, (b) circonférentielle et (c) longitudinales sur le rayon (en micromètres) sont présentés sous la forme de graphiques, dans les figures 2a, 2b et 2c, respectivement, pour les trois types de mandrins proposés.

Dans ces figures 2a à 2c, on observe très clairement que l'utilisation d'une tige en graphite (courbe 1) ne génère que des contraintes minimes (inférieures à 70 Mpa) et/ou de compression (contraintes de valeur négative) au sein du composite, alors que l'utilisation d'une tige en verre de silice (courbe 2) génère de fortes contraintes de traction circonférentielles et longitudinales au sein du composite.

Ces fortes contraintes de traction conduisent à une fissuration du composite, voire à sa rupture, si le mandrin est conservé jusqu'au bout de la densification du composite.

On constate que le passage à un mandrin creux en verre de silice (tube) (courbe 3) diminue fortement les contraintes résiduelles, comparativement à un mandrin plein en verre de silice (tige) (courbe 2).

On constate également que, même dans le cas de l'utilisation d'un mandrin de forme tubulaire, il est tout de même nécessaire de retirer ce mandrin avant la densification totale du composite. En effet, comme on peut le constater en consultant le graphique de la figure 3, qui représente la déformation observée en fonction de la contrainte appliquée sur un tube composite SiC/SiC obtenu de la manière décrite ci-dessus (même tressage 2D de la préforme fibreuse, même densification, même côtes), un tel tube a une limite élastique située aux alentours de 100 Mpa : il ne peut donc pas supporter des contraintes supérieures à 100 MPa sans se fissurer.

Or, on observe des contraintes de traction supérieures à 100 MPa (en valeur absolue) dans les figures 2b et 2c.

C'est la raison pour laquelle, selon le procédé de l'invention, il faut retirer le mandrin avant que la quantité de matrice infiltrée ne soit trop importante, c'est-à-dire avant que la fraction volumique de matrice infiltrée ne soit supérieure à 40%, préférentiellement avant qu'elle ne soit supérieure à 30%. De préférence, la fraction volumique de matrice infiltrée est d'environ 10%.

L'élément support est retiré en réalisant une attaque chimique sélective du matériau dudit élément support. Dans le cas d'un élément support en verre de silice, l'élément support peut être éliminé facilement en procédant à une attaque chimique dans un bain d'acide fluorhydrique (HF) à température ambiante.

Une fois l'élément support retiré, on peut poursuivre et terminer la densification de la préforme fibreuse afin de finaliser la pièce en matériau composite selon les propriétés recherchées.

A la différence de la densification partielle réalisée pour consolider la préforme, la densification réalisée après le retrait de l'élément support n'est plus limitée par la température de fusion de l'élément support, mais seulement par la température de fusion des fibres de la préforme. Ainsi, tous les procédés de densification peuvent être envisagés, même ceux nécessitant des températures de mise en oeuvre au-delà de 1100°C (correspondant à la température de fusion du verre de silice), puisque l'élément support en verre de silice a été retiré.

## Revendications

1. Procédé de réalisation d'une pièce en matériau composite à matrice en matériau céramique et à fibres en matériau céramique, le procédé comprenant les étapes successives suivantes :
- réalisation d'une préforme fibreuse (1) par entrelacement de fils (2) constitués de fibres en matériau céramique sur une surface de contact d'un élément support reproduisant la forme interne et/ou externe de la pièce à réaliser ;
- densification partielle de la préforme fibreuse (1) à une température inférieure à la température de fusion du matériau de l'élément support et inférieure à la température de fusion du matériau des fibres de la préforme, ladite densification partielle aboutissant à une préforme fibreuse consolidée comprenant une fraction volumique en matrice supérieure à 5% et au plus égale à 40% du volume de matrice de la pièce à réaliser ;
- retrait de l'élément support de la préforme fibreuse consolidée par attaque chimique de la surface de contact du matériau de l'élément support ;
- densification de la préforme consolidée, réalisée à une température inférieure à la température de fusion des fibres de cette préforme.

2. Procédé de réalisation d'une pièce en matériau composite à matrice céramique selon la revendication 1, dans lequel la préforme fibreuse consolidée à l'étape de densification partielle comprend une fraction volumique en matrice au plus égale à 30% du volume de matrice de la pièce à réaliser.

3. Procédé de réalisation d'une pièce en matériau composite à matrice céramique selon la revendication 2, dans lequel la préforme fibreuse consolidée à l'étape de densification partielle comprend une fraction volumique en matrice au plus égale à 20% du volume de matrice de la pièce à réaliser.

4. Procédé de réalisation d'une pièce en matériau composite à matrice céramique selon la revendication 3, dans lequel la préforme fibreuse consolidée à l'étape de densification partielle comprend une fraction volumique en matrice au plus égale à 10% du volume de matrice de la pièce à réaliser.

5. Procédé de réalisation d'une pièce en matériau composite à matrice céramique selon la revendication 1, dans lequel l'élément support est en silice, de préférence en verre de silice.

6. Procédé de réalisation d'une pièce en matériau composite à matrice céramique selon la revendication 1, dans lequel l'élément support est en alumine.

7. Procédé de réalisation d'une pièce en matériau composite à matrice céramique selon la revendication 1, dans lequel l'élément support est en zircone.

8. Procédé de réalisation d'une pièce en matériau composite à matrice céramique selon la revendication 1, dans lequel l'élément support comporte une âme qui est en un métal apte à résister à la température de densification de la préforme et qui est recouverte d'une couche de silice, de verre de silice, d'alumine ou de zircone.

9. Procédé de réalisation d'une pièce en matériau composite à matrice céramique selon l'une quelconque des revendications 5, 6 ou 7, dans lequel l'attaque chimique de l'élément support est obtenue à l'aide d'un acide, de préférence de l'acide fluorhydrique, ou d'une base.

10. Procédé de réalisation d'une pièce en matériau composite à matrice céramique selon la revendication 8, dans lequel l'attaque chimique de l'élément support est obtenue en réalisant l'attaque chimique de la couche de silice, de verre de silice, d'alumine ou de zircone présente sur l'âme à l'aide d'un acide, de préférence de l'acide fluorhydrique, ou d'une base.

11. Procédé de réalisation d'une pièce en matériau composite à matrice céramique selon la revendication 1, dans lequel l'élément support est un élément creux.

12. Procédé de réalisation d'une pièce en matériau composite à matrice céramique selon la revendication 1 ou 11, dans lequel l'élément support possède un axe de révolution ou est de forme plane.

13. Procédé de réalisation d'une pièce en matériau composite à matrice céramique selon la revendication 1, dans lequel les fibres sont en un matériau choisi parmi le carbone et le carbure de silicium.

14. Procédé de réalisation d'une pièce en matériau composite à matrice céramique selon la revendication 1, dans lequel la matrice est en un matériau choisi parmi le carbone et le carbure de silicium.

15. Procédé de réalisation d'une pièce en matériau composite à matrice céramique selon la revendication 1, dans lequel la pièce en matériau composite est une gaine en matériau composite pour un réacteur à neutrons rapides à caloporteur gaz ou à caloporteur sodium ou pour un réacteur à eau pressurisée.

16. Procédé de réalisation d'une pièce en matériau composite à matrice céramique selon la revendication 1, dans lequel la pièce en matériau composite est un tube hexagonal en matériau composite pour un réacteur à neutrons rapides à caloporteur gaz ou à caloporteur sodium ou pour un réacteur à eau pressurisée.

## Patentansprüche

1. Verfahren zur Herstellung eines Werkstücks aus Verbundmaterial mit einer Matrix aus Keramikmaterial und mit Fasern aus Keramikmaterial, wobei das Verfahren die folgenden aufeinanderfolgenden Schritte umfasst:
- Herstellen einer Faservorform (1) durch Verflechten von Fäden (2), die durch Fasern aus Keramikmaterial gebildet sind, auf einer Kontaktoberfläche eines Tragelements, welches die innere und/oder die äußere Form des herzustellenden Werkstücks reproduziert;
- partielles Verdichten der Faservorform (1) bei einer Temperatur kleiner als die Schmelztemperatur des Materials des Tragelements und kleiner als die Schmelztemperatur des Materials der Fasern der Vorform, wobei das partielle Verdichten zu einer konsolidierten Faservorform führt, die einen Volumenanteil der Matrix größer als 5% und höchstens gleich 40% des Matrixvolumens des herzustellenden Werkstücks umfasst;
- Entfernen des Tragelements der konsolidierten Faservorform durch chemischen Ätzen der Kontaktoberfläche des Materials des Tragelements;
- Verdichten der konsolidierten Vorform, durchgeführt bei einer Temperatur kleiner als die Schmelztemperatur der Fasern dieser Vorform.

2. Verfahren zur Herstellung eines Werkstücks aus Verbundmaterial mit einer Keramikmatrix nach Anspruch 1, bei dem die im Schritt des partiellen Verdichtens konsolidierte Faservorform einen Volumenanteil der Matrix von höchstens gleich 30% des Volumens der Matrix des herzustellenden Werkstücks umfasst.

3. Verfahren zur Herstellung eines Werkstücks aus Verbundmaterial mit einer Keramikmatrix nach Anspruch 2, bei dem die im Schritt des partiellen Verdichtens konsolidierte Faservorform einen Volumenanteil der Matrix von höchstens gleich 20% des Volumens der Matrix des herzustellenden Werkstücks umfasst.

4. Verfahren zur Herstellung eines Werkstücks aus Verbundmaterial mit einer Keramikmatrix nach Anspruch 3, bei dem die im Schritt des partiellen Verdichtens konsolidierte Faservorform einen Volumenanteil der Matrix von höchstens gleich 10% des Volumens der Matrix des herzustellenden Werkstücks umfasst.

5. Verfahren zur Herstellung eines Werkstücks aus Verbundmaterial mit einer Keramikmatrix nach Anspruch 1, bei dem das Tragelement aus Siliziumoxid ist, vorzugsweise aus Siliziumoxidglas.

6. Verfahren zur Herstellung eines Werkstücks aus Verbundmaterial mit einer Keramikmatrix nach Anspruch 1, bei dem das Tragelement aus Aluminiumoxid ist.

7. Verfahren zur Herstellung eines Werkstücks aus Verbundmaterial mit einer Keramikmatrix nach Anspruch 1, bei dem das Tragelement aus Zirkonoxid ist.

8. Verfahren zur Herstellung eines Werkstücks aus Verbundmaterial mit einer Keramikmatrix nach Anspruch 1, bei dem das Tragelement eine Seele umfasst, die aus einem Metall ist, welches dazu ausgelegt ist, der Verdichtungstemperatur der Vorform zu widerstehen, und die bedeckt ist mit einer Schicht aus Siliziumoxid, Siliziumoxidglas, Aluminiumoxid oder Zirkonoxid.

9. Verfahren zur Herstellung eines Werkstücks aus Verbundmaterial mit einer Keramikmatrix nach einem der Ansprüche 5, 6 oder 7, bei dem das chemische Ätzen des Tragelements mit Hilfe einer Säure erzielt wird, vorzugsweise Fluorwasserstoffsäure, oder einer Base.

10. Verfahren zur Herstellung eines Werkstücks aus Verbundmaterial mit einer Keramikmatrix nach Anspruch 8, bei dem das chemische Ätzen des Tragelements erzielt wird, indem man das chemische Ätzen der Schicht aus Siliziumoxid, Siliziumoxidglas, Aluminiumoxid oder Zirkonoxid realisiert, die auf der Seele vorhanden ist, mit Hilfe einer Säure, vorzugsweise Fluorwasserstoffsäure, oder einer Base.

11. Verfahren zur Herstellung eines Werkstücks aus Verbundmaterial mit einer Keramikmatrix nach Anspruch 1, bei dem das Tragelement ein hohles Element ist.

12. Verfahren zur Herstellung eines Werkstücks aus Verbundmaterial mit einer Keramikmatrix nach Anspruch 1 oder 11, bei dem das Tragelement eine Drehachse besitzt oder eine flache Form aufweist.

13. Verfahren zur Herstellung eines Werkstücks aus Verbundmaterial mit einer Keramikmatrix nach Anspruch 1, bei dem die Fasern aus einem Material sind, welches ausgewählt ist aus Kohlenstoff und Siliziumcarbid.

14. Verfahren zur Herstellung eines Werkstücks aus Verbundmaterial mit einer Keramikmatrix nach Anspruch 1, bei dem die Matrix aus einem Material ist, welches ausgewählt ist aus Kohlenstoff und Siliziumcarbid.

15. Verfahren zur Herstellung eines Werkstücks aus Verbundmaterial mit einer Keramikmatrix nach Anspruch 1, bei dem das Werkstück aus Verbundmaterial eine Hülle aus Verbundmaterial für einen Reaktor mit schnellen Neutronen mit einem Gaskühlmittel oder mit einem Natriumkühlmittel oder für einen Druckwasserreaktor ist.

16. Verfahren zur Herstellung eines Werkstücks aus Verbundmaterial mit einer Keramikmatrix nach Anspruch 1, bei dem das Werkstück aus Verbundmaterial ein hexagonales Rohr aus Verbundmaterial für einen Reaktor mit schnellen Neutronen mit einem Gaskühlmittel oder mit einem Natriumkühlmittel oder für einen Druckwasserreaktor ist.

## Claims

1. Method for producing a part made of ceramic material matrix and ceramic material fibres composite material, the method comprising the following successive steps:
- formation of a fibrous preform (1) by intertwining threads (2) constituted of ceramic material fibres on a contact surface of a support element reproducing the internal and/or external shape of the part to be produced;
- partial densification of the fibrous preform (1) at a temperature below the melting temperature of the material of the support element and below the melting temperature of the material of the fibres of the preform, said partial densification resulting in a consolidated fibrous preform comprising a matrix volume fraction above 5% and at the most equal to 40% of the matrix volume of the part to be produced;
- removal of the support element from the consolidated fibrous preform by chemical attack of the contact surface of the material of the support element;
- densification of the consolidated preform, carried out at a temperature below the melting temperature of the fibres of said preform.

2. Method for producing a part made of ceramic matrix composite material according to claim 1, wherein the fibrous preform consolidated at the partial densification step comprises a matrix volume fraction at the most equal to 30% of the matrix volume of the part to be produced.

3. Method for producing a part made of ceramic matrix composite material according to claim 2, wherein the fibrous preform consolidated at the partial densification step comprises a matrix volume fraction at the most equal to 20% of the matrix volume of the part to be produced.

4. Method for producing a part made of ceramic matrix composite material according to claim 3, wherein the fibrous preform consolidated at the partial densification step comprises a matrix volume fraction at the most equal to 10% of the matrix volume of the part to be produced.

5. Method for producing a part made of ceramic matrix composite material according to claim 1, wherein the support element is made of silica, preferably made of silica glass.

6. Method for producing a part made of ceramic matrix composite material according to claim 1, wherein the support element is made of alumina.

7. Method for producing a part made of ceramic matrix composite material according to claim 1, wherein the support element is made of zirconium oxide.

8. Method for producing a part made of ceramic matrix composite material according to claim 1, wherein the support element comprises a core that is made of a metal able to withstand the densification temperature of the preform and which is covered with a layer of silica, silica glass, alumina or zirconium oxide.

9. Method for producing a part made of ceramic matrix composite material according to any of claims 5, 6 or 7, wherein the chemical attack of the support element is obtained using an acid, preferably hydrofluoric acid, or a base.

10. Method for producing a part made of ceramic matrix composite material according to claim 8, wherein the chemical attack of the support element is obtained by carrying out the chemical attack of the layer of silica, silica glass, alumina or zirconium oxide present on the core using an acid, preferably hydrofluoric acid, or a base.

11. Method for producing a part made of ceramic matrix composite material according to claim 1, wherein the support element is a hollow element.

12. Method for producing a part made of ceramic matrix composite material according to claim 1 or 11, wherein the support element has an axis of revolution or is of flat shape.

13. Method for producing a part made of ceramic matrix composite material according to claim 1, wherein the fibres are made of a material selected from carbon and silicon carbide.

14. Method for producing a part made of ceramic matrix composite material according to claim 1, wherein the matrix is made of a material selected from carbon and silicon carbide.

15. Method for producing a part made of ceramic matrix composite material according to claim 1, wherein the part made of composite material is a composite material cladding for a gas cooled or sodium cooled fast reactor or for a pressurised water reactor.

16. Method for producing a part made of ceramic matrix composite material according to claim 1, wherein the part made of composite material is a hexagonal composite material tube for a gas cooled or sodium cooled fast reactor or for a pressurised water reactor.
